(19) Europäisches Patentamt
European Patent Office
Office européen des brevets

(11) EP 4 718 386 A1

(12) **EUROPEAN PATENT APPLICATION**

(43) Date of publication:
01.04.2026 Bulletin 2026/14

(21) Application number: 24203485.8

(22) Date of filing: 30.09.2024

(51) International Patent Classification (IPC):
G06V 10/44 (2022.01)      G06V 10/774 (2022.01)
G06V 10/776 (2022.01)      G06V 20/56 (2022.01)

(52) Cooperative Patent Classification (CPC):
G06V 20/56; G06V 10/454; G06V 10/774;
G06V 10/776

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Mobility GmbH
80997 München (DE)

(72) Inventors:
• Schlemper, Sören Alfred
47057 Duisburg (DE)
• Waschulzik, Thomas
85354 Freising (DE)

(74) Representative: Siemens Patent Attorneys
Postfach 22 16 34
80506 München (DE)

(54) **BENCHMARKING A REALITY GAP BETWEEN SIMULATED AND REAL-WORLD IMAGING DATASETS**

(57) The present disclosure enables quality benchmarking a plurality of simulated imaging datasets of a driving scene of an assisted or autonomous vehicle. The method involves processing feature vectors obtained from each simulated imaging dataset to obtain embedded feature vectors, determining local complexity indicators for multiple neighborhoods of the respective embedded feature vector, and comparing an array data structure comprising local complexity values with a reference array data structure associated with real-world imaging datasets. This comparison enables the determination of a quality benchmark value indicative of a reality gap between the plurality of simulated imaging datasets and the real-world imaging datasets, thereby allowing for improved training or validation of machine-learning models to solve control tasks of assisted or autonomous vehicles.

FIG 5

**Description**

*Independent of the grammatical term usage, individuals with male, female or other gender identities are included within the term.*

TECHNICAL FIELD

Various examples relate to assessing a plurality of datasets for training or validating a machine-learning model. Various examples specifically relate to techniques of quality benchmarking a plurality of simulated imaging datasets of a driving scene of an assisted or autonomous vehicle.

BACKGROUND

The number of application fields and use cases which employ machine-learning models - e.g., deep neural networks, classification models, regression models, support vector machines, to give just a few examples - has widely increased over the past few years.

For example, in the context of assisted or autonomous control of trains, deep neural networks (DNNs) can be used for a variety of tasks such as object detection, segmentation of objects of a certain type, track monitoring, and predictive maintenance. For example, object detection can be used to identify obstacles or other trains on the tracks, while track monitoring can be used to detect defects in the tracks or to monitor the condition of the train as it travels along the rails. A segmentation mask can be output that segments objects of a certain type in an image. Predictive maintenance can be used to predict when components of the train might fail, allowing for proactive maintenance to be scheduled before a breakdown occurs.

DNNs are generally well-suited for these tasks because they are able to process large amounts of data quickly and can learn complex patterns and relationships within the data. This allows them to make accurate predictions and decisions based on real-time data from the train's sensors and other sources.

On the other hand, DNNs require significant amounts of training data and validation data. For instance, consider a task of detecting or even localizing persons in a train track area, in the context of autonomous control of trains. In such a scenario, it is necessary to train and/or validate the DNN based on datasets that are captured for a scene in which a person is present in the train track area. For a vision-based control task, imaging datasets are used for training and/or validation. For instance, images are required that depict persons standing on or near the train tracks. Naturally, such image data is not easily available, because during normal operation of a train such events seldomly happen.

To mitigate this problem, i.e., to obtain significant number of datasets also for sparse events, it is known to use simulated input images. For instance, a digital twin of a railroad environment can be generated, simulating trains and persons moving around in the railroad environment. Then, using appropriate rendering techniques, simulated images can be generated. Based on such simulated images, it is then possible to train or validate the DNN. For instance, it would be possible to validate that a DNN correctly detects or localizes persons standing in the train track area based on simulated images.

However, such techniques relying on simulated images face certain restrictions. In particular, it has been observed that under certain conditions a DNN may react differently to simulated images if compared to real-world images, i.e., input images that are acquired using a camera. This leads to a situation in which it is not possible, using prior art techniques, to validate reliable functioning of a DNN based on simulated images: due to remaining differences between real-world images on the one hand and simulated images on the other hand, a "reality gap" exists that undermines the trust level associated with training or validating DNNs configured for solving respective control tasks.

SUMMARY

Accordingly, a need exists for advanced techniques of training and/or validating neural networks and other machine-learning models based on datasets. In particular, a need exists for quality benchmarking training and/or validation datasets. A need exists to determine a quality benchmark value that is indicative of a reality gap between simulated datasets and real-world datasets.

This need is met by the features of the independent claims. The features of the dependent claims define embodiments.

A computer-implemented method of enabling assessment of a plurality of datasets is disclosed. Each dataset of the plurality of datasets includes a respective input datapoint in an input space and an associated output datapoint in an output space. The method includes, for each dataset of the plurality of datasets: determining multiple local complexity indicators for multiple neighborhoods of the input datapoint of the respective dataset in the input space, the multiple neighborhoods having different sizes, any given local complexity indicator being based on differences between input

EP 4 718 386 A1

distances and output distances, the input distances being in the input space between the input datapoint of the respective dataset and the input datapoints of each of multiple further datasets in the respective neighborhood, the output distances being in the output space between the output datapoint of the respective dataset and the output datapoints of each of the multiple further datasets in the respective neighborhood. The method further includes determining an array data structure comprising at least a array dimension and a further array dimension, the array dimension resolving the multiple neighborhoods based on their sizes, the further array dimension resolving the local complexity values, entries of the array data structure being indicative of a frequency of occurrence of the respective local complexity values at the respective size of the neighborhoods across all datasets of the plurality of datasets. The method further includes, identifying a trace along the array dimension and through the array data structure.

A computer-implemented method of enabling assessment of processing of a plurality of datasets in a machine-learning model, e.g., a DNN, each dataset of the plurality of datasets comprising a respective input datapoint in an input space and an associated output datapoint in an output space. The input datapoints of the plurality of datasets are patches of a predefined size of input data of an intermediate layer of the machine-learning algorithm. The input data is obtained by processing root data using an input layer of the machine-learning model and optionally one or more upstream intermediate layers of the machine-learning model. The output datapoints of the plurality of datasets are outputs of the intermediate layer calculated based on the patches. The method includes, for each dataset of the plurality of datasets: determining multiple local complexity indicators for multiple neighborhoods of the input datapoint of the respective dataset in the input space, the multiple neighborhoods having different sizes, any given local complexity indicator being based on differences between input distances and output distances, the input distances being in the input space between the input datapoint of the respective dataset and the input datapoints of each of multiple further datasets in the respective neighborhood, the output distances being in the output space between the output datapoint of the respective dataset and the output datapoints of each of the multiple further datasets in the respective neighborhood. The method also includes determining a data structure comprising at least a first dimension and a second dimension, the first dimension resolving the multiple neighborhoods based on their sizes, the second dimension resolving the local complexity indicators, entries of the data structure being indicative of a frequency of occurrence of the respective local complexity indicator at the respective size of the neighborhoods across all datasets of the plurality of datasets. The method further includes, identifying a trace along the array dimension and through the array data structure.

By identifying a trace through the array data structure, the complexity can be reduced. The dimensionality of the trace through the array data structure smaller than the dimensionality of the array data structure itself. On the other hand, important information enabling reliable assessment of the plurality of data sets is retained in the trace. Accordingly, by comparing the trace with one more reference traces, the plurality of data sets can be assessed. A quality benchmark value can be determined

For example, the method may further include identifying a trace along the array dimension and through the array data structure. The trace may label maximum values in the various bins of the array data structure. The trace may have a reduced dimensionality if compared to the array data structure. The comparison may be based on the trace and a reference trace through the reference array data structure. By implementing the comparison between the trace and the reference trace (instead based on a difference between the high-dimensional array data structures), a more efficient comparison can be implemented.

Identifying of the trace may include, for each array position of the array data structure along the array dimension, determining a respective maximum local complexity value. The respective maximum local complexity value may be determined based on the respective entries of the array data structure at the respective array position. The trace can then include a sequence of the maximum local complexity values across the array dimension. This enables to determine a reliable and meaningful trace.

It would be optionally possible to pre-smooth the array data structure, to obtain smoother traces. For instance, said determining of the respective maximum local complexity value for each array position of the array data structure along the array dimension may include determining, for each respective entry of the array data structure, an average value. Such average value may be determined based on a statistical combination of that respective entry and neighboring entries of the array data structure. Then, the respective maximum local complexity values may be determined based on these average values. A smoother trace can be obtained that is less affected by noise and local uncertainties.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1A schematically illustrates multiple datasets and a neighborhood of a given dataset of the multiple datasets.

3

FIG. 1B schematically illustrates multiple datasets and a neighborhood of a given dataset of the multiple datasets.

FIG. 2 schematically illustrates a processing device according to various examples.

FIG. 3 is a flowchart of a method according to various examples.

FIG. 4 is a flowchart of a method according to various examples.

FIG. 5 schematically illustrates a processing pipeline according to various examples.

FIG. 6 schematically illustrates a processing pipeline according to various examples.

FIG. 7 schematically illustrates a reduced dimensionality plot of an embedded feature vector, an array data structure determined based on local complexity values of multiple embedded feature vectors, and multiple traces through such array data structure according to various examples.

FIG. 8 schematically illustrates a difference trace according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), a tensor processing unit (TPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques that facilitate assessment of multiple datasets will be disclosed. For instance, each dataset may be an imaging dataset. I.e., each dataset may include an image or data derived from an image. To give another example, each dataset could be an N-dimensional vector of sensor readings. For instance, typical dimensionality can be in the range of 3 to 20, or more (e.g., up to 10.000). The dimensionality of the datasets depends on the particular use case.

Various technical use cases can be facilitated by the datasets. For instance, it would be possible to consider datasets that describe the operation of a machine or apparatus based on sensor readings of sensors attached to the apparatus and/or state reports provided by a control unit of the apparatus. For example, it would be possible that the apparatus is a turbine, e.g., a gas turbine or an airplane engine. It would be possible that sensors are attached to such turbine that measure vibrations and temperature, e.g., at multiple positions. Stress or strain of certain parts of the turbine could be monitored using respective sensors. For example, a predictive-maintenance use case may benefit from such datasets. For instance, a maintenance task may predict whether maintenance is required or not. It would also be possible to implement a regression task (instead of a classification task) to predict a likelihood of a false state within a certain predetermined time duration or the expected remaining failure free operation time. In another example, the functioning of an assisted or autonomous vehicle, e.g., a train, could be monitored. For instance, vibrations, temperature, and velocity of certain parts of the engine of the train may be monitored. This may be used to detect root error causes for fault states of the train engine. In yet another example, operation of a railroad switch may be monitored. For instance, while switching between different positions of the railroad switch, vibrations in an actuator and/or at joints of the railroad switch can be monitored and respective measurement data can be provided as measurement vectors defining the datasets. In a further example, railroad tracks or a drivable area can be detected, e.g., in 2-D image data acquired using a camera. Objects situated on the railroad tracks or on the drivable area can be detected. If objects situated on the railroad tracks or on the drivable area are detected, the objects can be classified. For example, a binary classification whether an object is a person or not can be executed. A segmentation, e.g., a semantic segmentation would be possible. In yet a further example, landmarks arranged in a surrounding can be detected, e.g., in 2-D image data acquired using a camera. For instance, a traffic light could be detected. Positioning signs could be detected. Further, anomalies in a behavior of a technical system can be detected. For example, it could be detected whether cargo in a container has moved. In an example, imaging datasets of the driving scene of an assisted or autonomous vehicle may be obtained. Such driving scenes may have a forward-looking perspective in a direction of travel of the assisted or autonomous vehicle. In such a scenario, the control of the assisted or autonomous vehicle may be based on said imaging datasets. Assisted or autonomous vehicles may be lands-based vehicles or aerial vehicles. For instance, assisted or autonomous trains may benefit from the techniques disclosed herein. For instance, based on such imaging data, partial or full control of the assisted autonomous vehicle would be possible. Emergency breaking may be triggered. A warning may be issued. Evasive maneuvers may be triggered, to give just a few examples.

As will be appreciated from the above, depending on the semantic content of the datasets, various technical use cases can be facilitated. The technical use cases provided above Armenia examples and other variations are conceivable.

Various techniques enable the assessment of datasets. In particular, relationships of the datasets with respect to each other can be investigated. It would also be possible to assess the relationship of such datasets with respect to other reference datasets. For instance, it would be possible to assess whether a first group of datasets includes features that are not included in a second group of datasets. I.e., it can be determined whether there is a domain shift between the first and second groups of datasets.

As a general rule, the plurality of datasets could define training data. Training data can be used for training a machine-learning model. The plurality of datasets may also define validation data that can be used for validating whether a pre-trained machine-learning model correctly operates. The plurality of datasets could also define inference data for a machine-learning model. Here, associated ground truth may not be available.

Example machine-learning models that can be trained and/or validated and/or supervised based on such data include, but are not limited to: neural networks; DNNs; convolutional DNN (CNN); support vector machines; classification machine-learning models; regression machine-learning models; recurrent neural networks; etc.. Hereinafter, techniques focus on an implementation of the machine-learning model as a DNN, mainly for illustrative purposes. The techniques disclosed herein can also be transferred to other types of machine-learning models.

Hereinafter, techniques quality benchmarking a plurality of datasets to be used for training or validating a DNN will be disclosed. According to various examples, a quality benchmark value is determined for multiple simulated imaging datasets. According to various examples, it can be determined whether the quality benchmark value is above a certain threshold. According to various examples, it can be determined whether the reality gap between the simulated imaging datasets and real-world imaging datasets is below a threshold. Thereby, improved simulated imaging datasets can be obtained. In particular, the quality benchmark value can be indicative of a reality gap between the simulated imaging datasets and real-world imaging datasets. A reality gap is a particular domain shift between simulated and real-world data. Details with respect to the reality gap are disclosed below.

Simulated imaging datasets can be obtained from a rendering process (e.g., using ray tracing) based on a digital-twin environment. Real-world imaging datasets can be obtained from images captured using a camera. In the context of the reality gap, it can be determined whether the plurality of simulated imaging datasets include features (e.g., human-non-recognizable features) that are unique for those simulated imaging datasets; i.e., such features are not present and accordingly not recognized by the machine-learning model in the real-word imaging datasets. Such features may thus be seen as "artifacts" stemming from the simulation. The reality gap may quantify the presence or absence of such artifact features. The reality gap can be indicative of whether there is a domain shift between the simulated imaging datasets and the real-world imaging datasets.

This approach of benchmarking simulated imaging datasets is not only applicable to imaging datasets, but also applicable to other non-vision datasets, e.g., sensor datasets. For instance, it would be possible to simulate LIDAR or radar data and compare against real-world LIDAR or radar data. Other sensor modalities are also possible. However, for sake of simplicity, hereinafter, reference is made to imaging datasets.

Next, aspects are described that enable determining a data structure that practically enables the quality benchmarking of the plurality simulated imaging datasets. The data structure tracks multiple local complexity indicators that are determined for each simulated imaging dataset. For a given simulated imaging dataset, the multiple local complexity indicators are determined for multiple neighborhoods of that given dataset. This is explained in detail. First, for each simulated imaging dataset, an embedded feature vector is obtained. The embedded feature vector is obtained from processing, at a layer (e.g., the input layer or a hidden layer), of a DNN a feature vector that is obtained from the respective simulated imaging dataset, e.g., after applying one or more image manipulation operations and/or after processing at one or more upstream layers of the DNN. The embedded feature vector is indicative of latent features included in the simulated imaging dataset. Using the techniques disclosed herein, it can be checked whether such latent features included in the simulated imaging data set are also present in a real-world imaging data set.

Then, multiple local complexity indicators are determined, for multiple neighborhoods of the embedded feature vector. These multiple neighborhoods have different sizes (indexed using k throughout). To determine the local complexity indicators, distances between (*i*) the embedded feature vector of that respective simulated imaging dataset and (*ii*) the remaining embedded feature vectors of the other respective simulated imaging datasets is considered.

Then, an array data structure is determined. This array data structure includes multiple array dimensions, e.g., two or more array dimensions. A first array dimension resolves the multiple neighborhoods based on their sizes. A second array dimension is indicative of a frequency of occurrence of the respective local complexity values at the respective size of the neighborhoods across all simulated imaging datasets.

Finally, a comparison between the array data structure and a reference data structure is determined. Based on such comparison, it is then possible to determine a quality benchmark value that is indicative of a reality gap between the plurality of simulated imaging datasets with respect to the real-world imaging datasets.

For example, it would be possible that the plurality of simulated imaging datasets are associated with a driving scene of an assisted or autonomous vehicle, e.g., a train. Similarly, it would be possible that the reference data structure is associated with a plurality of real-world imaging datasets that are associated with that same driving scene or another driving scene of the assisted or autonomous vehicle. For instance, the plurality of simulated imaging datasets can be associated with a driving scene of a train where one more objects, e.g., persons, are present ahead in the train track area. Similarly, the plurality of real-world imaging datasets can be associated with such driving scene of the train where one or more objects, e.g., persons, are present ahead in the train track area.

Above, techniques have been presented that enable the quality benchmarking of the plurality of simulated imaging datasets against real-world imaging datasets based on an array data structure which represents multiple local complexity indicators. As a general rule, various kinds and types of local complexity indicators can be used. In some examples, local complexity indicators are based on differences between input and output distances between input/output datapoints in a certain neighborhood. A so-called SHLQI2-formalism may be used. Details are explained next.

In the SHLQI2-formalism, the neighborhood is defined with respect to the input datapoint determined for a given dataset. The input datapoint has a certain position in an input space. Different criteria can be used to construct neighborhoods, e.g., k-nearest neighbors or distance in input space. It is then possible to determine the array data structure that stores the local complexity indicators. The array data structure stores the local complexity indicators in an aggregated manner. A histogram approach is be used where the frequency of occurrence of certain complexity values (lying within a certain bin) for a given neighborhood size is considered. In the SHLQI-formalism, the local complexity indicator is calculated according to:

$$QI^2R(P) = \frac{1}{|P^2|} \cdot \sum_{x \in P^2} (d_{NRE}(x) - d_{NRA}(x))^2$$

(1)

Here, *P* are all input datapoints (e.g., embedded feature vectors obtained from processing a feature vector derived from a simulated imaging dataset at a layer of the machine-learning model) in the respective neighborhood of the given dataset. $d_{NRE}$ is the distance between the input datapoint of the given dataset and the input datapoint of a respective dataset (*x*) in the neighborhood; $d_{NRA}$ is the distance between the output datapoint of the given dataset and the output datapoint of the respective dataset. The Euclidian distance or another distance metric may be considered for calculating the distances. In some scenarios, it is possible to set $d_{NRA}$ to a fixed value for all data pairs, e.g., 1.

As a general rule, various options exist for determining the neighborhood (and with it *P*). For instance, k-nearest neighbors (KNN) may be considered which provides the so-called MLQI2 matrix:

$$mlqi^2[i, k](P) = QI^2(KNN_{re}(P, p_i, k))$$

(2)

The MLQI2 matrix describes the complexity of every dataset having index i for all neighborhoods *k*. Using neighborhoods defines based on the nearest neighbors is only one example. In another example, neighborhoods could be determined based on n-dimensional spheres (for an n-dimensional input space), wherein the spheres are progressively larger.

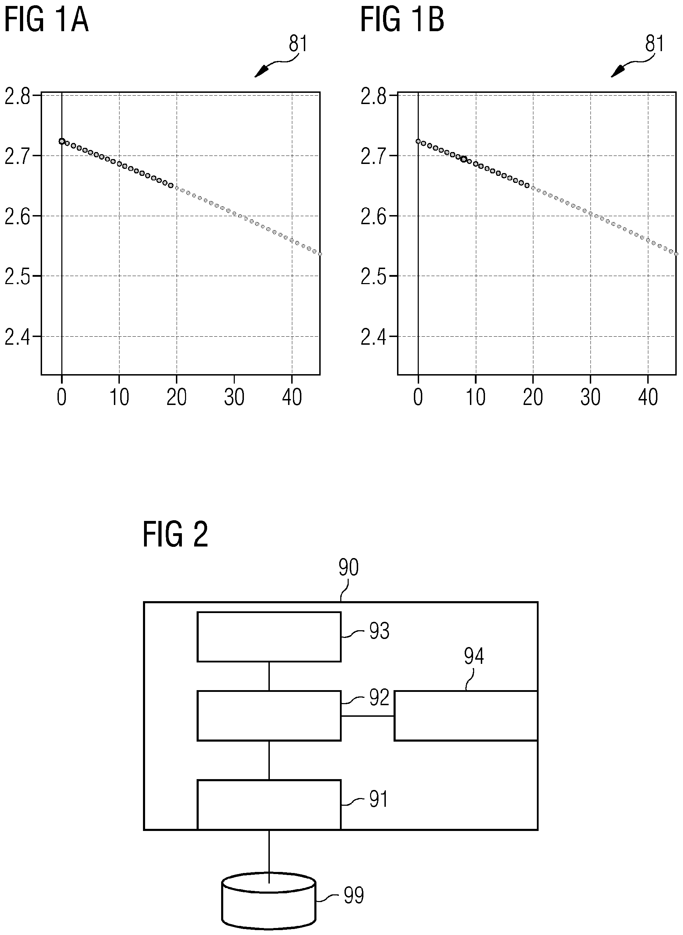

FIG. 1A is a plot 81 of multiple datasets (circles). This plot 81 provides the position of the input datapoints along x-axis and the position of the output datapoints along the Y-axis.

Also illustrated is the KNN for a certain dataset (large dark circle) with k=19. The datasets part of this neighborhood are emphasized in the plot.

To construct a data structure it is necessary to compare the local complexity values for different datasets and neighborhoods. This is achieved using binning.

Here, each value of MLQI2 is associated with a respective bin

$$v = 0,1,2,\dots,\left\lceil \frac{max_{hi}-min_{hi}}{binsize_{hi}}\right\rceil$$

This yields the so-called HLQI2 ("H" for histogram);

$$hlqi^2[v,k](P) = \sum_{i=1}^{|P|} I^3(mlqi^2[i,k](P),v) \cdot blqi^2[i,k](P)$$

$$(3)$$

Here, the function $I^3(h, v)$ returns "1" if $v \le \dfrac{h-min_{hi}}{binsize_{hi}} < v + 1$ holds true; or else returns "0".

Thus, by means of the function it is checked whether the complexity of a given input datapoint pi is within a certain bin v.

Finally, summing is executed across all datasets $p_i$. This process is repeated for each bin v. Thus, the distribution of the frequency of occurrence of the local complexity indicator across all datasets $p_i$ is captured by the bins v that correspond to the neighborhoods k.

The term $blqi^2$ helps to avoid boundary effects. $blqi^2$ is generally optional. Here, each neighborhood is only considered once. This is relevant for neighborhoods of datasets having input datapoints at an edge of the input space. This is illustrated in FIG. 1B. FIG. 1B shows the plot 81 of the same datasets as FIG. 1A. However, the KNN neighborhood with k=19 is highlighted for another dataset (large dark circle). The neighborhoods in FIG. 1A and FIG. 1B are the same. Thus, they would yield the same value for MLQI2. By using BLQI2 the MLQI2 is only determined once for all identical neighborhoods and only used once in subsequent calculations, by the appropriate bookkeeping. The BLQI2 is determined as follows:

$$blqi^2[i,k](P) = \begin{cases} 1, & \forall j < i | KNN_{re}(P,p_j,k) \ne KNN_{re}(P,p_i,k) \\ 0, & sonst \end{cases}$$

$$(4)$$

Finally, SHLQI2 is a normalized version of HLQI2 (normalized to [0|1]:

$$shlqi^2[v,k](P) = \left(\frac{hlqi^2[v,k](P)}{\sum_{s=1}^{|P|} hlqi^2[s,k](P)}\right)^{gamma_{hi}}$$

$$(5)$$

Here $gamma_{hi}$ denotes a gamma calibration of the histogram to clearly show every indicator even if there is a huge difference in the number of datasets stored in different bins. It only serves a better visualization.

As will be appreciated, both HLQI2 as well as SHLQI2 describe the frequency of occurrence of certain local complexity values across all datasets. They are array data structures and a first array dimension resolves the multiple neighborhood based on their sizes (e.g., increasing values for k-nearest neighbors); and a second array dimension resolves respective local complexity values (e.g., in discrete bins). Entries of the array data structure are indicative of the frequency of occurrence of the local complexity values across all datasets.

These data structures help to quickly and comprehensively assess multiple datasets, even where the count of the datasets is large, e.g., larger than 100 or larger than 10,000 or even larger than 1,000,000. The binning/histogram approach reduces complexity and make information of different data structures comparable.

FIG. 2 schematically illustrates a computing device 90 according to various examples. The computing device 90 could be a personal computer or a server. The computing device 90 includes a processor 92 in the memory 93. The computing device 90 also includes a communication interface 91. The processor 92 may be a graphics processing unit (GPU) comprising multiple compute units operating in parallel. It would be possible that the computing device 90 includes multiple GPUs in parallel for distributed processing.

The processor 92 can load, via the communication interface 91, a plurality of datasets from the database 99. The plurality of datasets could also be retained in a local memory 93.

The processor 92 can load program code from the memory 93 and execute the program code. The processor, upon loading and executing the program code can perform techniques as disclosed herein.

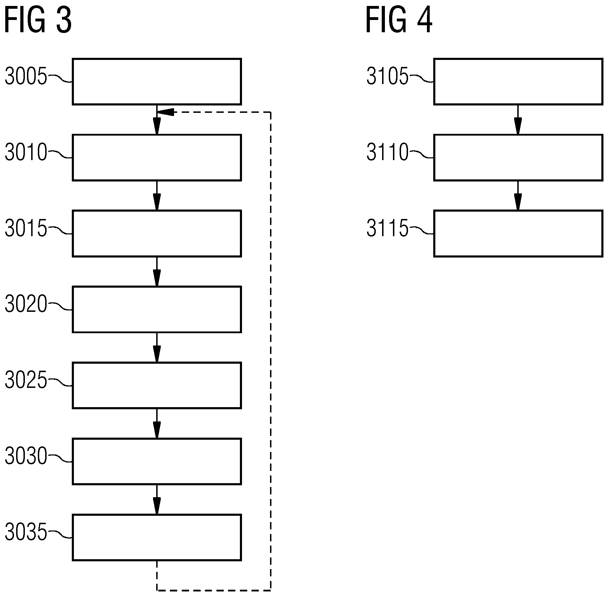

FIG. 3 is a flowchart of a method according to various examples. The method of FIG. 3 enables quality benchmarking of a plurality of imaging datasets, specifically of simulated imaging datasets. The simulated imaging datasets can be imaging a driving scene of an assisted or autonomous vehicle. The quality such simulated imaging datasets may be for training or validating a machine-learning model - in the present case, a DNN - to solve a control task of the assisted or autonomous vehicle. For instance, it would be possible that the simulated imaging datasets are associated with labels that specify whether certain objects are present or not present in the simulated imaging datasets. For instance, the labels may localize one or more objects, e.g., using bounding boxes or a segmentation mask. The labels may classify objects that are present in the simulated imaging datasets. Based on such information, the control task of the assisted or autonomous vehicle may be emergency braking, evasive maneuver, warning output, etc.

At box 3005, multiple simulated imaging datasets are obtained. Each of the multiple simulated imaging datasets can include one or more images. For instance, the multiple simulated imaging datasets can be loaded from a picture database. The multiple simulated imaging datasets may be obtained from a rendering process. The multiple simulated imaging datasets may be obtained based on a digital twin of a driving environment of an assisted or autonomous vehicle.

At box 3010, it is optionally possible to pre-process each of the multiple simulated imaging datasets. For instance, one or more image manipulation operations may be executed. The one or image manipulation operations may be selected from the group including: brightness adjustment; contrast adjustment; edge extraction; color adjustment; cropping; skewing; principle-component analysis; noise injection; blurring; to give just a few examples.

At this point, input dataset to the DNN is available. The input data corresponds to or is a representation of (after pre-processing at box 3010) of the simulated imaging datasets.

At box 3015, an embedded feature vector is determined for each of the multiple simulated imaging datasets. For this, an inference run of the DNN is triggered for each of the input datasets obtained from box 3010. Then, a given layer - e.g., a hidden layer - of the DNN translates that feature vector to the embedded feature vector. In other words, the embedded feature vector is the output at a certain layer of the DNN.

At box 3020, multiple local complexity indicators are determined. A local complexity indicator is determined based on each embedded feature vector. For instance, multiple neighborhoods can be considered and the local complexity value can be determined based on the number of further embedded feature vectors within the particular neighborhood. See Eq. (1) for an example.

At box 3025, an array data structure is determined based on the local complexity indicators. For instance, the SHLQI2 can be determined. See Eq. (5).

Next, at box 3030, a comparison between the array data structure determined at box 3025 and another reference array data structure is determined. For instance, that reference array data structure may be associated with real-world imaging datasets of the driving scene or another driving scene of the assisted or autonomous vehicle.

At box 3035, a quality benchmark value is determined. The quality benchmark value is determined based on the comparison. The quality benchmark values indicative of a reality gap between the plurality of simulated imaging datasets with respect to the real-world imaging datasets.

For instance, various techniques are based on the finding that different strategies of preprocessing the multiple simulated imaging data sets at box 3010 yield different quality benchmark values. Thus, as illustrated in FIG. 3 using the dashed arrow, it would be possible to compare the quality benchmark value obtained at box 3035 with a predefined threshold and then conditionally repeat the method of FIG. 3 starting from box 3010, using one or more different image manipulation operations. Thereby, an improved pre-processing parameter set can be determined that minimizes the reality gap between the input datasets to the DNN obtained from the simulated imaging datasets and the input data points to the DNN obtained from the real-world imaging dataset. The pre-processing can be optimized to minimize the reality gap. For instance, it has been shown that a minimized reality gap can be obtained by increasing the contrast and reducing the brightness of the simulated imaging datasets in the pre-processing at box 3010.

Such approaches only one example. In another example it would also be possible to reconfigure the rendering process that yields the simulated imaging datasets. One or more properties of a digital twin simulation from which the simulated imaging datasets are retrieved may be adjusted.

Once a quality benchmark value has been obtained that fulfills one or more requirements, e.g., exceeds a certain threshold, it would then be possible to use the associated input data points to the DNN for validating or training the DNN. Upon validating for training the DNN, the DNN can be deployed at one or more agents and used for a control task, e.g., of a assisted autonomous vehicle.

Various options are available for implementing the comparison between the array data structure and the reference array data structure at box 3030. For instance, each bin value of each bin of the array data structure may be compared with the respective bin value of the respective bin of the reference array data structure. Then, the differences can be summed, to obtain a single comparison value. That single comparison value may be proportional to the quality benchmark value. Another option for implementing the comparison at box 3030 as illustrated in FIG. 4.

FIG. 4 is a flowchart of an example method. The method of FIG. 4 is a particular implementation of box 3030 of FIG. 3. The method of FIG. 4 specifies details of a comparison between multiple array data structures. The method of FIG. 4 is based on the finding that it is possible to reduce dimensionality of the multidimensional array data structure in a manner that preserves features characteristic for the quality benchmarking disclosed herein. In particular, a trace, i.e., a curve for different neighborhood sizes through a given array data structure (e.g., SHLQI2 or derived therefrom ), can be determined to preserve such characteristic features of the array data structure. The trace may be represented by a 1-D vector or may be represented as black-white values in a 2-D array data structure. Then, the comparison can be based on such trace and another reference trace through the array data structure. Hereinafter, details of identifying the trace are disclosed.

First, at box 3105, it is optionally possible to pre-process the array data structure. Assuming the array data structure is corresponding to the SHLQI2, then a summed SHLQI2- the so-called SSHLQI2- can be determined first:

$$sshlqi^2[v,k] = \sum_{i=-n}^{n} \varphi\left(\frac{\frac{i}{s} - \mu}{\sigma}\right) \cdot shlqi^2[(v+i),k]$$

$$(6)$$

Here, $n$ regulates the number of neighboring bins of the array data structure across which an average value in the sshlqi2 is to be determined. $s$ is a scaling factor. $\varphi$ is the normal distribution:

$$\varphi\left(\frac{x-\mu}{\sigma}\right) = \frac{1}{\sigma \cdot \sqrt{2\pi}} \cdot e^{-\frac{1}{2}\left(\frac{x-\mu}{\sigma}\right)^2}$$

with mean $\mu$ and standard deviation $\sigma$. These properties can be set based on prior knowledge, e.g., to n=4, $\mu$=0, $\sigma$ = 1, s = 2. As will be appreciated, Eq. 6 determines, for each entry of the array data structure (defined by the shlqi2), a respective average value based on a statistical combination of that respective entry and neighboring entries of the array data structure. Other types of averaging and statistical combinations can be employed.

Based on the SSHLQI2 - or based on the SHLQI2 (i.e., box 3105 is optional) - it is then possible to determine a respective maximum local complexity value across all entries of the array data structure at a given neighborhood size. I.e., for each k, the maximum bin value of SHLQI2 or SSHLQI2 can be determined. This operation is repeated for all $k,$ yielding the trace through the array data structure. For instance, the trace can be represented as follows:

$$rmshlqi^2[v,k] = \max(sshlqi^2[k])$$

$$(7)$$

wherein *max* determines, for each $k,$ a certain bin having the respective maximum bin value and returns a vector that only includes zeros, except at that particular bin, where the value is 1. Other representations - different than this black-white coding in a 2-D array structure rmshlqi2 - of the trace are possible. Thus, a maximum local complexity value is determined based on the entries of the array data structure at each array position along the array dimension that resolves the neighborhood size. The trace is thus defined by a sequence of maximum local complexity values across that array dimension.

The trace enables a dimensionality reduction of the rich information included in the SHLQI2. The trace can be easily compared against another trace or even other traces. It has been observed that even such comparison amongst traces yields reliable results in connection with the quality benchmarking of the simulated imaging datasets.

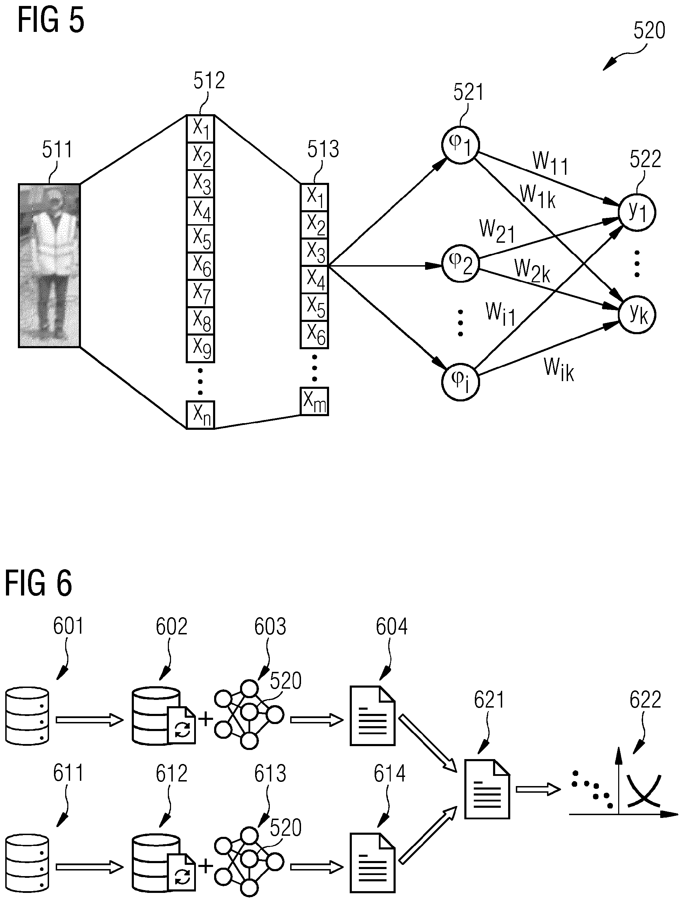

FIG. 5 schematically illustrates a processing pipeline according to various examples. Illustrated is a simulated image 511 (forming an imaging dataset) of a person standing in a train track area. The simulated image 511 is represented by a vector of 512 (e.g., pixel-by-pixel) that is then preprocessed, e.g., using a principle component analysis. This yields another input vector 513. The input vector 513 is a compressed representation of the vector 512. The input vector 513 is input to a DNN 520. At an intermediate layer of the DNN (one or upstream layers are not shown in FIG. 4), an embedded feature vector 521 is determined. That embedded feature vector 521 may then be further processed by the DNN 520, to obtain an output vector 515 - however that further processing is not of interest in the present context.

The embedded feature vector 521 is used for determining local complexity values. For this, the embedded feature vector 521 obtained from the simulated image 511 is compared against multiple other embedded feature vectors obtained from other simulated images.

FIG. 6 schematically illustrates a processing pipeline according to various examples.

FIG. 6 illustrates two repositories 601, 611. The repository 601 includes a plurality of real-world simulated imaging datasets, while the repository 611 includes a plurality of simulated imaging datasets. The real-world imaging datasets may be preprocessed at 602. Likewise, the simulated imaging datasets may be preprocessed at 612; respective techniques with respect to the preprocessing have been previously discussed in connection with FIG. 3: box 3010. Then, the preprocessed real-world imaging datasets are fed to the DNN 520 at 603, to obtain respective embedded feature vectors. Likewise, at 613, the pre-processed simulated imaging datasets are fed to the DNN 520. Based on the respective embedded feature vectors, the array data structures and respective traces are determined at 604, 614. Then, at 621, a comparison between the two traces obtained at 604 and 614 is determined, to thereby determine a quality benchmark value at 622. As will be appreciated from FIG. 5, it is possible to determine multiple array data structures for different groups of imaging datasets using similar processing, e.g., preprocessing as previously discussed in connection with equations (1)-(5). Also, multiple traces can be determined based on such array data structures using similar processing, e.g., the processing as previously discussed in connection with FIG. 4.

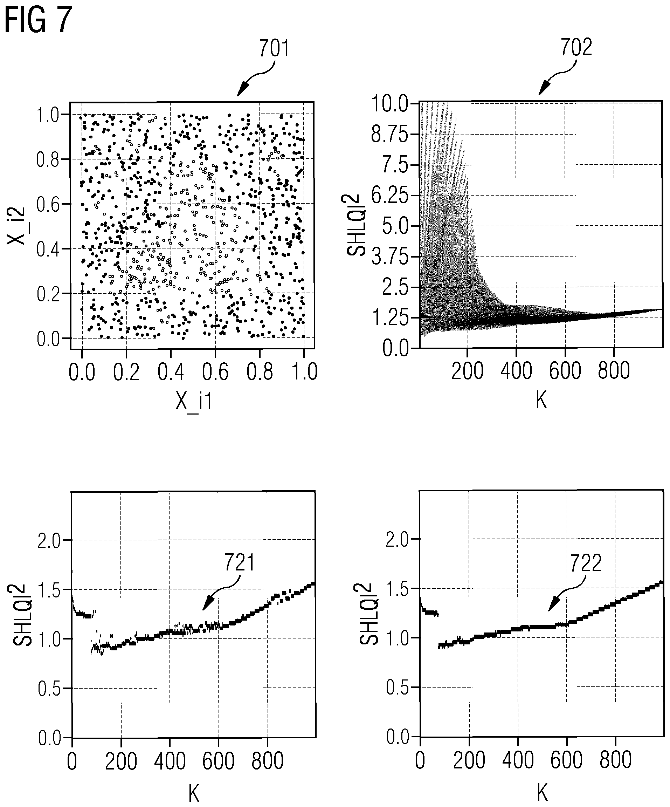

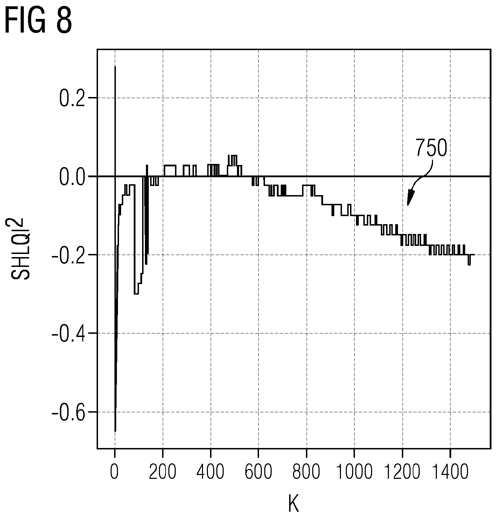

FIG. 7 illustrates a 2-D UMAP plot 701 of features of multiple embedded feature vectors obtained for multiple simulated imaging datasets. FIG. 7 also illustrates the associated SHLQI2 array data structure 702. Also illustrated are a first trace 721 determined based on SHLQI2 directly and a second trace 722 determined based on SSHLQI2 for the array data structure 702. These traces 721, 722 can be compared against a reference trace, e.g., by subtracting the reference trace from the trace 721 or the trace 722. A respective difference trace 750 is shown in FIG. 8. For instance, the area between the zero line and the difference trace 750 is larger (smaller) for lager (smaller) deviations between the two compared traces. The area can be calculated as follows:

$$F = 1/k \cdot \int \dddot{} \llbracket \; \llbracket |v \rrbracket \_deviation \, (k)| \, dk \rrbracket$$

This factor F can be used as quality benchmark value.

Summarizing, metrics have been disclosed for benchmarking simulated/synthetic datasets. The metrics enable a comparison between a plurality of simulated data sets with a plurality of real-world data sets. In particular, high-dimensional data sets can be benchmarked, e.g., imaging data sets. Thus, instead of comparing the images themselves, it is possible to consider a reaction of a DNN for such comparison. And embedded feature vector is determined at a hidden layer of a DNN. The embedded feature vector has varying feature values depending on the particular imaging data set and, optionally, depending on the particular preprocessing of the imaging data set. Then, a difference between the reaction of the neural network to real-world and simulated data sets can be considered.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, techniques have been disclosed in which a quality benchmark value is determined for simulated imaging datasets, thereby quantifying a reality gap between the simulated imaging data sets and real-world imaging datasets. Respective techniques as disclosed above can also be used for quality benchmarking other groups of datasets, e.g., a first type of real-world imaging dataset against a second type of real-world imaging dataset, non-imaging datasets, e.g., sensor readings against other sensor readings, etc. More generally, the techniques disclosed herein can be used to quantify domain shifts between different groups of datasets.

For further illustration, above, various scenarios have been disclosed in which an embedded feature vector is determined at the hidden layer of a DNN. However, similarly, other types of neural networks, e.g., a shallow neural network may be used. It would be possible that other types of machine-learning models benefit from the techniques herein, e.g., a support vector machine, etc.

## List of Reference

| | |
|---|---|
| plot | 81 |
| device | 90 |
| communication interface | 91 |
| processor | 92 |
| ocal memory | 93 |
| database | 99 |
| image | 511 |
| vector | 512 |
| input vector | 513 |
| output vector | 515 |
| Deep neural network | 520 |
| feature vector | 521 |
| repository | 601 |
| repository | 611 |
| UMAP plot | 701 |
| array data structure | 702 |
| trace | 721 |
| trace | 722 |
| Difference trace | 750 |
| box | 3005 |
| box | 3010 |
| box | 3015 |
| box | 3020 |
| box | 3025 |
| box | 3030 |
| box | 3035 |
| box | 3105 |

## Claims

1. A computer-implemented method of quality benchmarking a plurality of simulated imaging datasets of a driving scene of an assisted or autonomous vehicle for training or validating a machine-learning model to solve a control task of the assisted or autonomous vehicle, the method comprising:

   - for each simulated imaging dataset of the plurality of simulated imaging datasets: processing, at a layer of a deep neural network, a feature vector that is obtained from the respective simulated imaging dataset, to thereby obtain an embedded feature vector,
   - for each simulated imaging dataset of the plurality of simulated imaging datasets: determining multiple local complexity indicators for multiple neighborhoods of the respective embedded feature vector, the multiple neighborhoods having different sizes, any given local complexity indicator being based on distances between the respective embedded feature vector of the respective simulated imaging dataset and the embedded imaging feature vectors of each of multiple further datasets in the respective neighborhood,
   - determining an array data structure comprising at least an array dimension and a further array dimension, the array dimension resolving the multiple neighborhoods based on their sizes, the further array dimension resolving the local complexity values, entries of the array data structure being indicative of a frequency of occurrence of the respective local complexity values at the respective size of the neighborhoods across all simulated imaging datasets of the plurality of simulated imaging datasets,

- performing a comparison between the array data structure and a reference array data structure associated with real-world imaging datasets of the driving scene or another driving scene of the assisted or autonomous vehicle, and

- based on the comparison, determining a quality benchmark value indicative of a reality gap between the plurality of simulated imaging datasets with respect to the real-world imaging datasets.

2. The method of claim 1, further comprising:

- identifying a trace along the array dimension and through the array data structure,

wherein the comparison is based on the trace and a reference trace through the reference array data structure.

3. The method of claim 2,

wherein said identifying of the trace comprises:

- for each array position of the array data structure along the array dimension: determining a respective maximum local complexity value based on the respective entries of the array data structure at the respective array position,

wherein the trace comprises a sequence of the maximum local complexity values across the array dimension.

4. The method of claim 3,
wherein said determining of a respective maximum local complexity value for each array position of the array data structure along the array dimension comprises:

- determining, for each respective entry of the array data structure, an average value based on a statistical combination of that respective entry and neighboring entries of the array data structure.

5. A computing device for quality benchmarking a plurality of simulated imaging datasets of a driving scene of an assisted or autonomous vehicle for training or validating a machine-learning model to solve a control task of the assisted or autonomous vehicle, the computing device comprising a processor and a memory, the processor being configured to load program code and to execute the program code, the processor, upon executing the program code, being configured to:

- for each simulated imaging dataset of the plurality of simulated imaging datasets: process, at a layer of a deep neural network, a feature vector that is obtained from the respective simulated imaging dataset, to thereby obtain an embedded feature vector,
- for each simulated imaging dataset of the plurality of simulated imaging datasets: determine multiple local complexity indicators for multiple neighborhoods of the respective embedded feature vector, the multiple neighborhoods having different sizes, any given local complexity indicator being based on distances between the respective embedded feature vector of the respective simulated imaging dataset and the embedded imaging feature vectors of each of multiple further datasets in the respective neighborhood,
- determine an array data structure comprising at least an array dimension and a further array dimension, the array dimension resolving the multiple neighborhoods based on their sizes, the further array dimension resolving the local complexity values, entries of the array data structure being indicative of a frequency of occurrence of the respective local complexity values at the respective size of the neighborhoods across all simulated imaging datasets of the plurality of simulated imaging datasets,
- perform a comparison between the array data structure and a reference array data structure associated with real-world imaging datasets of the driving scene or another driving scene of the assisted or autonomous vehicle, and
- based on the comparison, determine a quality benchmark value indicative of a reality gap between the plurality of simulated imaging datasets with respect to the real-world imaging datasets.

6. The computing device of claim 5, the processor, upon executing the program code, being further configured to:

- identify a trace along the array dimension and through the array data structure, wherein the comparison is based on the trace and a reference trace through the reference array data structure.

7. The computing device of claim 6, the processor, upon executing the program code, being further configured to identify of the trace by:

   - for each array position of the array data structure along the array dimension: determining a respective maximum local complexity value based on the respective entries of the array data structure at the respective array position,

   wherein the trace comprises a sequence of the maximum local complexity values across the array dimension.

8. The computing device of claim 7, the processor, upon executing the program code, being further configured to determine a respective maximum local complexity value for each array position of the array data structure along the array dimension by:

   - determining, for each respective entry of the array data structure, an average value based on a statistical combination of that respective entry and neighboring entries of the array data structure.

## FIG 1A

## FIG 1B

## FIG 2

FIG 3

3005

3010

3015

3020

3025

3030

3035

FIG 4

3105

3110

3115

## FIG 5

## FIG 6

## FIG 7

FIG 8

Europäisches
Patentamt
European
Patent Office
Office européen
des brevets

## EUROPEAN SEARCH REPORT

**Application Number**

EP 24 20 3485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 379 671 A1 (SIEMENS MOBILITY GMBH [DE]) 5 June 2024 (2024-06-05)<br>* paragraph [0007] *<br>* paragraph [0022] *<br>* paragraph [0024] *<br>* paragraph [0026] - paragraph [0027] *<br>* paragraph [0032] *<br>* paragraph [0045] - paragraph [0046] *<br>* paragraph [0048] *<br>* paragraph [0059] *<br>* paragraph [0066] *<br>* paragraph [0074] - paragraph [0078] *<br>* paragraph [0086] *<br>* paragraph [0089] *<br>* paragraph [0094] *<br>* paragraph [0098] *<br>* paragraph [0109] *<br>* paragraph [0142] *<br>----- | 1-8 | INV.<br>G06V10/44<br>G06V10/774<br>G06V10/776<br>G06V20/56 |
| A | EYAL BETZALEL ET AL: "A Study on the Evaluation of Generative Models", ARXIV.ORG, CORNELL UNIVERSITY LIBRARY, 201 OLIN LIBRARY CORNELL UNIVERSITY ITHACA, NY 14853,<br>22 June 2022 (2022-06-22), XP091255943,<br>* the whole document *<br>----- | 1-8 | **TECHNICAL FIELDS SEARCHED (IPC)**<br><br>G06V |

The present search report has been drawn up for all claims

| Place of search | Date of completion of the search | Examiner |
|---|---|---|
| The Hague | 27 February 2025 | Koutroumpas, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

**EP 4 718 386 A1**

## ANNEX TO THE EUROPEAN SEARCH REPORT
## ON EUROPEAN PATENT APPLICATION NO.

EP 24 20 3485

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2025

| Patent document cited in search report | Publication date | Patent family member(s) | Publication date |
|---|---|---|---|
| EP 4379671 A1 | 05-06-2024 | EP 4379671 A1<br>US 2024184758 A1 | 05-06-2024<br>06-06-2024 |

EPO FORM P0459

For more details about this annex : see Official Journal of the European Patent Office, No. 12/82

20